# EUROPEAN PATENT SPECIFICATION

(11) **EP 2 646 584 B1**
(45) Date of publication and mention of the grant of the patent: **26.09.2018**
(21) Application number: 11813796.7
(22) Date of filing: 02.12.2011
(51) Int. Cl.: C22B 7/00, C22B 59/00

(54) **MAGNET RECYCLING**
RECYCLING VON MAGNETEN
RECYCLAGE D'AIMANT

(30) Priority: 02.12.2010 GB 201020383
(43) Date of publication of application: 09.10.2013
(73) Proprietor: The University of Birmingham, Edgbaston, Birmingham B15 2TT (GB)
(72) Inventor: HARRIS, Ivor Rex, Birmingham West Midlands B29 7JA (GB); SPEIGHT, John, Framlingham Suffolk IP13 9QE (GB); WALTON, Allan, Dudley West Midlands DY2 8HZ (GB)
(74) Representative: Bailey, Jennifer Ann
(86) International application number: PCT/GB2011/001680
(87) International publication number: WO 2012/072989

(56) References cited:
- DE-C1- 19 843 883
- JP-A- 2 263 902
- JP-A- H10 318 672
- US-A1- 2006 162 821
- US-B1- 6 444 052
- ZAKOTNIK ET AL: "Possible methods of recycling NdFeB-type sintered magnets using the HD/degassing process", JOURNAL OF ALLOYS AND COMPOUNDS, ELSEVIER SEQUOIA, LAUSANNE, CH, vol. 450, no. 1-2, 24 December 2007 (2007-12-24), pages 525-531, XP022400931, ISSN: 0925-8388
- ZAKOTNIK M ET AL: "Multiple recycling of NdFeB-type sintered magnets", JOURNAL OF ALLOYS AND COMPOUNDS, ELSEVIER SEQUOIA, LAUSANNE, CH, vol. 469, no. 1-2, 5 February 2009 (2009-02-05), pages 314-321, XP025881605, ISSN: 0925-8388, DOI: 10.1016/J.JALLCOM.2008.01.114 [retrieved on 2008-03-05]
- "Technology of production of powder coatings ED - Tosko Aleksandar Misev", 1 January 1991 (1991-01-01), POWDER COATINGS: CHEMISTRY AND TECHNOLOGY, WILEY, US, PAGE(S) 224 - 300, XP009131631, ISBN: 978-0-471-92821-8

## Description

The present invention relates to a process and apparatus for recycling magnets. In particular, the invention relates to a process and apparatus for recovering rare earth magnets from assemblies.

Rare earth magnets, in particular permanent magnets of the NdFeB type (neodymium iron boron magnets) and SmCo (samarium cobalt), are known for their high magnetic flux combined with high coercivity compared with those of conventional magnets. SmCo magnets are available in two different compositions, namely SmCo₅ and Sm₂(Co, Fe, Cu, Zr)₁₇. The transition metal content of the latter composition is rich in cobalt but also contains other metals such as iron and copper, and is commonly referred to as Sm₂Co₁₇. Rare earth magnets have found application in a wide range of electronic goods and "green" technologies such as wind turbine generators and electric motors in electric and hybrid vehicles.

The supply of materials for rare earth magnets, particularly the supply of neodymium (Nd) and dysprosium (Dy), is limited and demand is expected to exceed supply. This will cause material prices to increase and this could limit the use of NdFeB magnets and the development of green technologies unless alternative magnets or sources of supply can be found. Dy is used as an additive to NdFeB for high coercivity magnets used in motor applications. The limited supply of Nd, samarium (Sm) and Dy is a major concern to many developed economies and some countries are now classifying these as strategic materials.

NdFeB magnets are the most common of the rare earth magnets and are manufactured in two forms; fully dense magnets produced by a sintering process and bonded magnets, a cheaper form with a lower performance where magnetic particles of NdFeB are bonded into a structure with resins.

Currently, approximately 25% of sintered NdFeB magnets are supplied for use in computer hard drives as small thin magnets, each of which is approximately 13-20 grams. It is desirable to recover and recycle the NdFeB magnets at the end of the life of the hard drives, particularly as computers have a rapid turnover (typically <5 years). However, the only current method of recovery is by disassembly and mechanical removal of the magnet, which is a time-consuming and labour-intensive process. Hence this labour-intensive mechanical recovery of NdFeB magnets is relatively expensive, particularly in western countries where there is a need to retain stocks of such magnets to reduce exposure to raw material supply constraints. There are several challenges in order to remove rare earth magnets from assemblies. For example, in hard disk drives the magnets are embedded in a complicated electronic device with a lot of fixings. The magnets may be Ni coated, they may be glued into the assemblies, and the magnets are permanently magnetic. Another challenge for mixed waste streams is that some electrical goods may contain a mixture of different magnets including NdFeB, ferrite, AINiCo and SmCo magnets. If magnetic identification is employed combined with mechanical separation, then a mixture of all of these magnets will result. If SmCo is mixed in with NdFeB then this is a particular concern as Sm contamination would have a very detrimental effect on the magnetic properties of any NdFeB magnets produced from the recycled powder.
There is thus a need for a cost-effective and efficient method of recovering rare earth particulate material from assemblies.
Recovery of bonded magnets by dissolution processes is known from US6533837, however, such processes cannot be employed for sintered NdFeB magnets.

A method for recovering rare earth particulate material from an assembly comprising rare earth magnet is also known from DE 198 43 883 C1.

JP63121606 discloses an apparatus for separating and classifying the powder formed by hydrogen decrepitation.

Hydrogen Decrepitation (HD) is a known process for breaking rare earth alloys such as NdFeB into powder, as described by Zakotnik et al. ("Hydrogen Decrepitation and Recycling of Sintered NdFeB-type Sintered Magnets", Proceedings of 19th International Workshop on Rare Earth Permanent Magnets & Their Applications; pp 289-295). In the decrepitation process hydrogen preferentially enters the rare earth rich grain boundaries in the material. Initially the hydrogen reacts with the rare earth elements at the grain boundaries to form a hydride compound with the H₂ trapped in the crystal structure. The hydrogen then reacts with the NdFeB matrix grains forming an interstitial hydrogen solution with a -5% volume expansion. The differential volume expansion of the crystal structure due to formation of the hydride causes the brittle structure to fracture so that grains break away from the material forming a fine powder.
In the case of SmCo₅ magnets the reaction with hydrogen is very different to NdFeB. In this case the magnets are essentially single phase and the reaction with hydrogen involves the formation of a SmCoHₓ hydride with a well defined plateau pressure. The appreciable volume expansion involves the decrepitation of the brittle intermetallic compound into a fine powder.

In the case of Sm₂Co₁₇, the hydrogen forms a range of solutions (depending upon the H₂ pressure) and there is no distinct plateau as observed in SmCo₅. The volume expansion again results in decrepitation of the brittle intermetallic.

According to a first aspect of the present invention there is provided a method for recovering rare earth particulate material from an assembly comprising a rare earth magnet, the method comprising the steps of:
exposing the assembly to hydrogen gas to effect hydrogen decrepitation of the rare earth magnet whereby a rare earth particulate material is produced, and
tumbling the assembly in a rotatable porous container so as to facilitate separation of the rare earth particulate material from the assembly and movement of the rare earth particulate material through pores of the porous container.

The term "assembly" will be understood to mean any mechanical, electric or electronic device, machine or apparatus comprising multiple components or a part thereof, including, but not limited to, computer hard drives, mobile phones, speakers, dynamos, tools, motors, generators, MRI scanners, magnetic separators and the like.

It is known that rare earth magnets can be re-processed using the process of hydrogen decrepitation (HD), but the process has previously only been applied to "clean" uncoated magnets and not to assemblies where the main proportion of the content is other materials, which makes the magnets difficult to access. Thus the method of the invention allows rare earth particulate material to be recovered from an assembly without the need to first disassemble the components of the assembly, thereby saving time, labour and money. Conveniently, multiple assemblies may be processed at the same time to extract the rare earth particulate material.

In an embodiment, the rare earth magnet is NdFeB. The NdFeB magnet is demagnetised during the decrepitation process, thereby allowing the rare earth particulate material to be easily separated from the other components of the assembly. In an alternative embodiment, the rare earth magnet is SmCo. The SmCo magnet may be SmCo₅ or Sm₂Co₁₇. In a particular embodiment, the rare earth magnet is Sm₂Co₁₇. SmCo magnets are not demagnetised by the decrepitation process. The magnet may be demagnetised by other methods, for example by heating or by reversing the magnetic field.

In an embodiment, the method comprises an initial step of opening the assembly prior to exposing the assembly to the hydrogen gas, in order to facilitate exposure of the rare earth magnet to the hydrogen and to allow an exit route for the rare earth particulate material. Opening the assembly may involve destructively processing the assembly. For example, the assembly may be destructively processed by a mechanical process such as shredding or crushing, or by cutting open the assembly, e.g. using a cropper. Destructive processing may be particularly important for assemblies which are relatively gas tight, such as computer hard drives. Shredding is particularly useful for electronic devices (e.g. mobile phones) in which the magnets are only present in small quantities and/or which have multiple layers, making it difficult to extract the rare earth particulate material, such as mobile phones. By cutting the assembly open it is possible to keep the magnets intact in the device before the hydrogen decrepitation process is applied. This method of destructive processing therefore reduces the levels of impurities from other materials, compared to those introduced by shredding.

Alternatively, the assembly may be left complete and intact prior to its exposure to the hydrogen gas.

The assembly may be exposed to pure hydrogen gas, or it may be exposed to a mixture of hydrogen with one or more inert gases, for example nitrogen or argon. By "inert" it will be understood that the gas is non-reactive with the rare earth magnets under the conditions of use. In an embodiment, the assembly is exposed to an atmosphere comprising no more than 10% hydrogen, no more than 5% hydrogen, no more than 3% hydrogen, no more than 1% hydrogen, no more than 0.5% hydrogen or no more than 0.1% hydrogen. The use of a non-explosive gas mixture simplifies the processing equipment and makes handling of the gas safer.

A further advantage of using an inert atmosphere is that it protects the magnet material from oxidation. This is particularly advantageous where shredding is used, because as the rare earth magnets are broken up a large surface area is created which will oxidise if the shredding is carried out in air. Surface oxidation can prevent hydrogen from getting into the structure of the magnet pieces, slowing down or even preventing decrepitation. Therefore, in an embodiment, the destructive processing or shredding of the assembly is carried out in the absence of oxygen. The destructive processing/shredding may be carried out in an inert atmosphere of argon or nitrogen.

In a further embodiment, the assembly is destructively processed or shredded at the same time as being exposed to hydrogen gas. Shredding/destructive processing and decrepitation may be carried out simultaneously in an atmosphere consisting of pure hydrogen, or an atmosphere comprising no more than 10%, no more than 5%, no more than 3% hydrogen, no more than 1% hydrogen, no more than 0.5% hydrogen or no more than 0.1% hydrogen in nitrogen or argon. Simultaneous shredding and decrepitation enables rare earth particulate material to be recovered more efficiently from assemblies.

The high surface area of the rare earth magnet pieces produced by the shredding also allows the rare earth material to absorb the hydrogen very quickly, so that decrepitation can be carried out at relatively low partial pressures of hydrogen. This can be achieved by using a H₂/N₂ or a H₂/Ar mixture.

The pressure (or partial pressure where a mixture of gases is used) of hydrogen must be sufficient to break up the magnet structure and turn it into a particulate material. Where a low partial pressure of hydrogen is used (for example for shredded material), the gas mixture may be non explosive. This has a significant advantage as the gas can be used with less stringent health and safety regulations. However, if the pressure (or partial pressure) of hydrogen is too low the reaction kinetics will be too slow for the process to be commercially viable. If the pressure is too high the reaction vessel will have to be engineered to withstand the higher mechanical stresses, which will increase the complexity and cost and result in smaller reaction chambers. In a series of embodiments, the pressure, or partial pressure where a mixture of gases is used, of hydrogen is from 0.01 mbar to 100 bar, from 0.1 bar to 70 bar, from 0.1 bar to 50 bar, from 0.5 bar to 20 bar, or from 1 bar to 10 bar.

The atmosphere may be static or it may be flowing. If a static atmosphere is used, the level of hydrogen gas may need to be topped-up to maintain the pressure required and replace the gas which is consumed by the decrepitation process.

In an embodiment, the decrepitation process (i.e. the exposure of the assembly to the hydrogen gas) is carried out at a temperature of no more than 600°C, no more than 400°C, no more than 200°C or no more than 170°C. In an embodiment, decrepitation is carried out at a temperature of no less than 5°C, no less than 10°C, no less than 15°C or no less than 20°C. If the temperature is too high, formation of the hydride will not occur so the magnet(s) will not turn into a particulate material. It is also possible that at high temperatures other parts of the assembly could melt and hinder the recovery of the particulate magnet material. This may also result in impurities being entrained in the separated rare earth materials.

Higher pressures and temperatures are required for the decrepitation of Sm₂Co₁₇ magnets compared to NdFeB or SmCo₅ magnets. Thus, in an embodiment wherein the rare earth magnet is Sm₂Co₁₇, the decrepitation process is carried out at a relatively high temperature and/or a relatively high pressure. Suitably high temperatures include temperatures of at least 70°C,at least 80°C, at least 90°C and at least 100°C. Suitably high pressures include pressures of at least 7 bar, at least 8 bar, at least 9 bar and at least 10 bar. Conversely, if it is desired to cause decrepitation of a NdFeB and/or SmCo₅ magnet but not a Sm₂Co₁₇ magnet, the decrepitation process may be carried out at a relatively low temperature and a relatively low pressure. For example, decrepitation of a NdFeB and/or a SmCo₅ magnet may be carried out at 2 bar and room temperature. Under these conditions decrepitation of a Sm₂Co₁₇ magnet will not occur. The different conditions required for the decrepitation of NdFeB or SmCo₅ magnets compared to Sm₂Co₁₇ magnets conveniently allows the selective separation of NdFeB or SmCo₅ magnets from Sm₂Co₁₇ magnets. This is advantageous because even small quantities of samarium alloy in NdFeB material can be highly detrimental to the performance of an NdFeB magnet. Currently, these magnets must be analysed chemically to determine their composition, followed by mechanical separation. Furthermore, ferrite magnets and AINiCo magnets do not undergo decrepitation when exposed to hydrogen. The present invention therefore allows the separation of these magnets from rare earth magnets using the HD process.

Therefore, in a particular embodiment, the method is for recovering NdFeB or SmCo₅ particulate material from an assembly comprising an NdFeB and/or a SmCo₅ magnet in addition to a Sm₂Co₁₇ magnet, the method comprising the steps of:
exposing the assembly to hydrogen gas at a temperature and pressure that is sufficient to effect hydrogen decrepitation of the NdFeB or SmCo₅ magnet only but is insufficient to effect hydrogen decrepitation of the Sm₂Co₁₇ magnet, whereby NdFeB or SmCo₅ particulate material is produced, and
separating the NdFeB or SmCo₅ particulate material from the rest of the assembly.

SmCo₅ particulate material retains its permanent magnetism and so it can be easily separated from non-magnetic NdFeB material following the decrepitation process. Thus, in an embodiment wherein the assembly comprises a NdFeB magnet and a SmCo₅ magnet, and the decrepitation process results in the production of a mixture of NdFeB particulate material and SmCo₅ particulate material, the method may comprise the additional step of separating the non-magnetic NdFeB particulate material from the magnetic SmCo₅ particulate material. In some embodiments, the SmCo₅ particulate material is magnetically attached to ferrous components of the assembly, facilitating its separation from the non-magnetic NdFeB particulate material.

The assembly is exposed to the hydrogen gas for a period of time which depends on a number of factors including the hydrogen gas pressure, the temperature of the decrepitation process, the surface condition of the magnet(s) and the size of the magnet(s). In a series of embodiments, the assembly is exposed to the hydrogen gas for a period of time of from 10 minutes to 2 weeks, from 30 minutes to 1 week, from 1 hour to 64 hours, from 2 to 52 hours or from 3 to 48 hours. In another series of embodiments, the assembly is exposed to hydrogen for a period of time of from 2 to 8 hours, from 3 to 6 hours or from 4 to 5 hours.

The rare earth particulate material resulting from the decrepitation process (also referred to as the 'particulate material' or 'particles') may have a particle size that is smaller than most or all of the other components in the waste assembly, facilitating separation from the remaining assembly components. Separation of the rare earth particulate material is carried out by tumbling. Separation of the particulate material may be carried out during and/or after the decrepitation process. The separated particulate material may contain impurities, for example resulting from a shredding process. The method may therefore include a further step of chemically treating the recovered particulate material to remove or reduce the level of impurities.

The rare earth particulate material which results from the decrepitation process comprises a hydrided form of the rare earth alloy. In an embodiment, the method of the invention comprises an additional step of degassing to break down the hydride to remove the H₂ from the particulate material. In an embodiment, degassing is carried out by heating the particulate material. In a series of embodiments, degassing is carried out at a temperature of no more than 1500°C, no more than 1000°C or no more than 800°C. In another series of embodiments, degassing is carried out at a temperature of no less than 400°C , no less than 500°C, no less than 600°C or no less than 700°C . In a particular embodiment, degassing is carried out at a temperature of 750°C. In another series of embodiments, degassing is carried out at a pressure of no more than 1 Bar, no more than 0.5 Bar, no more than 0.1 Bar, no more than 0.05 Bar or no more than 0.01 Bar. Degassing may be carried out immediately after formation of the particulate material by the decrepitation process, or it may be carried out at a later time or date.

The rare earth particulate material may have a particle size ranging from about 1 µm to about 0.5 cm in size. The minimum particle size is determined by the grain size of the alloy.

One of the problems in recycling NdFeB magnets in particular is the removal of coatings from the surface of the magnets, such as Ni, Al and An coatings. The most commonly used coating is electrodeposited Ni. It is possible to process coated rare earth magnets using hydrogen decrepitation. However, higher pressures and temperatures are required for undamaged coated rare earth magnets compared to uncoated magnets. Thus, in an embodiment wherein the rare earth magnet has an undamaged coating, the decrepitation process is carried out at a temperature of at least 50, at least 70 or at least 100°C and/or a pressure of at least 5, at least 8 or at least 10 bar. If the surface coating is damaged (i.e. scratched, broken or punctured), the decrepitation process may be carried out at approximately room temperature and atmospheric pressure. Damage to the coating may be achieved by the destructive processing method(s) used to break up the assembly, such as by cutting or shredding.

In an embodiment wherein the rare earth magnet has a coating, and exposure of the assembly to hydrogen gas to effect hydrogen decrepitation results in production of coating particles in addition to rare earth particulate material, the method comprises a subsequent step of separating the rare earth particulate material from the coating particles. Separation of the coating particles may be carried out by sieving. Optionally, low energy milling or mechanical agitation may be used to preferentially break up the rare earth particulate material into even smaller particles which can be more easily separated from the coating particles. Alternative separation techniques for the coating particles may include magnetic separation, electrostatic separation and gas separation.

NdFeB magnets are also prone to oxidation. It is desirable to remove surface oxidised rare earth magnet material because its magnetic properties are generally degraded. The present inventors have found that on exposure of a coated NdFeB magnet to hydrogen, causing the coating to break away from the surface of the magnet, the coating material pulls away some of the surface magnet material which is likely to contain a significant amount of oxidised material, allowing it to be separated from the non-oxidised magnet material.

Therefore, in an embodiment wherein the rare earth magnet has a coating, and exposure of the assembly to hydrogen gas to effect hydrogen decrepitation results in production of coating particles in addition to rare earth particulate material, at least some of the coating particles are associated with oxidised rare earth particulate material derived from the surface layer of the magnet. Hydrogen decrepitation is therefore useful in the separation of oxidised material from NdFeB rare earth magnets.

According to a second aspect of the present invention there is provided apparatus for separating rare earth particulate material from an assembly comprising a rare earth magnet, the apparatus comprising
a reaction vessel having an opening which can be closed to form a gas-tight seal,
a separation means for separating the rare earth particulate material from the assembly, and
a collection means for collecting the rare earth particulate material,
wherein the reaction vessel is connected to a vacuum pump and a gas control system,
wherein the gas control system controls the supply of hydrogen gas to the reaction vessel, and
wherein the separation means is capable of tumbling and in that the separation means (14) comprises a rotatable porous container having pores which are sized to allow the rare earth particulate material to pass through the pores while retaining the assembly inside the container,
characterised in that the collection means comprises a collection vessel that is separate from and connected to the reaction vessel, the collection vessel being isolated from the reaction vessel by a valve which can be opened to allow the rare earth particulate material to pass from the reaction vessel into the collection vessel when required.

In an embodiment, the apparatus further comprises a means for opening or destructively processing the assemblies prior to decrepitation. In a particular embodiment, the apparatus comprises a shredder for shredding assemblies prior to the assemblies being loaded into the reaction vessel. In another embodiment the apparatus comprises a cropper for cropping or cutting open the assembly prior to decrepitation.

The scrap assemblies may be manually loaded into the reaction vessel, or they may be loaded from a hopper. In an embodiment, the assemblies are transported from the destructive processing means to the reaction vessel by a conveyor.

In a further embodiment, the apparatus comprises a heater for heating the reaction vessel during the decrepitation and/or degassing process. In another embodiment, a temperature control system is provided to monitor and control the temperature inside the sealed reaction vessel when the apparatus is in use, i.e. during the decrepitation process. The temperature may be manually controlled, or it may be controlled by a preset programme.

The gas control system may monitor and control the pressure inside the sealed reaction vessel when it is in use. The pressure may be manually controlled, or it may be controlled by a preset programme.

The separation means comprises a porous container which is positioned inside the reaction vessel. The rare earth particulate material produced by the decrepitation process may pass through the pores of the bottom and sides of the container and into the reaction vessel, while the remaining assembly components are retained within the container, thereby separating the particulate material from the assembly. The porous container may be removable, or it may be permanently fixed within the reaction vessel. In a particular embodiment, the separation means further comprises a vibration means which agitates the porous container to facilitate separation of the loose particles from the assembly. The separation means comprises a rotatable porous container. After decrepitation the container is rotated with the assemblies inside. The tumbling action causes the rare earth particulate material to fall out of the assembly components and through the holes/pores in the wall of the rotatable container to be collected in a suitable container below. The pores may be of any suitable size which allows the particulate material to pass through them but which retains the assemblies inside the container. The pores may conveniently be 2-3 mm in diameter. The rotatable container may be incorporated into or form part of the decrepitation vessel so that the mechanical agitation can take place during or after decrepitation. Alternatively, the rotatable container may be separate to the reaction vessel. In this embodiment the decrepitated assemblies are removed from the reaction vessel after decrepitation is complete and are then placed in the rotatable container for separation of the particles of rare earth material.
The collection comprises a separate collection vessel that is connected to the reaction vessel. The collection vessel is isolated from the reaction vessel by a valve which can be opened to allow the particles to pass from the reaction vessel into the collection vessel when required. In an embodiment, the collection vessel is situated underneath the reaction vessel so that the particles fall under gravity into the collection vessel when the valve is opened.
The invention will now be described by way of example with reference to the accompanying figures in which:
Figure 1 is a schematic diagram of apparatus not according to the present invention;
Figure 2a shows a roughly shredded computer hard drive prior to being processed by the method of the present invention;
Figure 2b shows a voice coil assembly manually removed from a computer hard drive, prior to being processed by the method of the present invention;
Figure 2c shows a hard drive assembly that has been cut open and then subjected to hydrogen decrepitation to remove the rare earth magnets, in accordance with an embodiment of the present invention;
Figure 3 shows rare earth particulate material obtained by the method of the present invention;

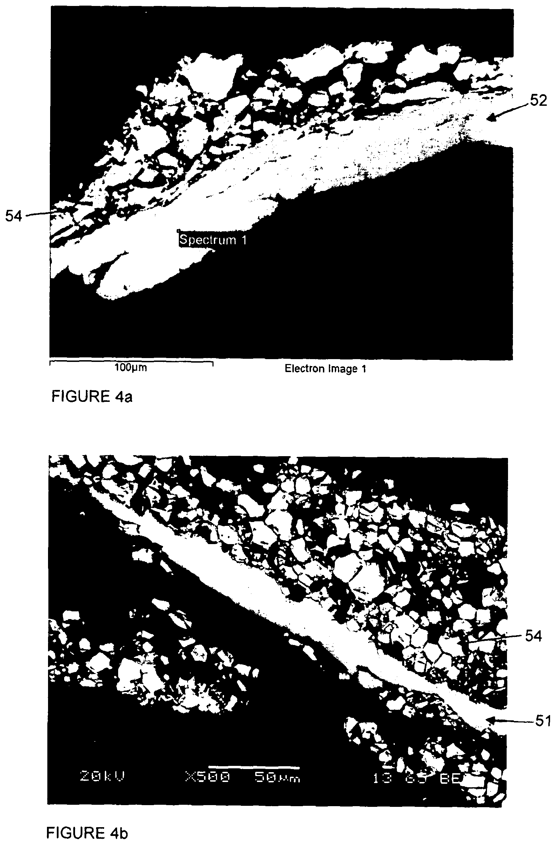

Figure 4a is an electron micrograph of a flake of a nickel-copper-nickel coating that has been separated from a NdFeB magnet by decrepitation; and
Figure 4b is an electron micrograph of a flake of a nickel coating that has been separated from a NdFeB magnet by decrepitation.

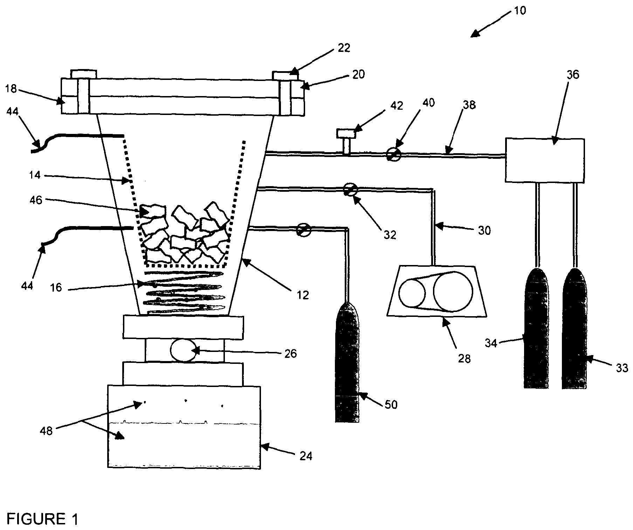

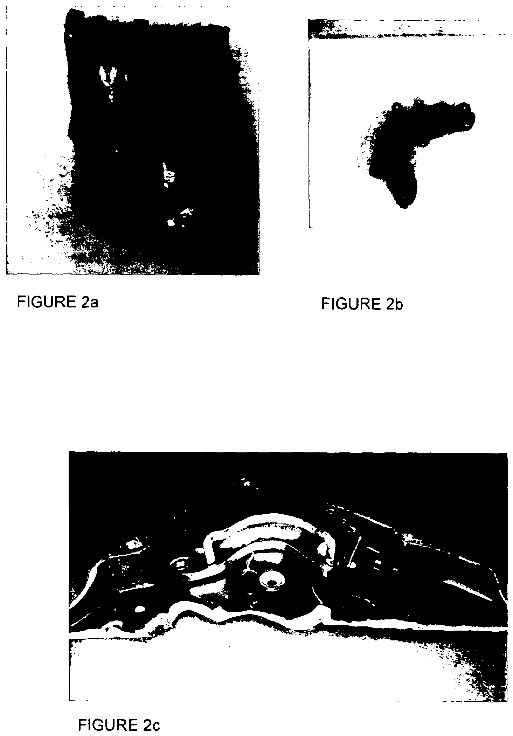

Figure 1 shows apparatus, which is used to recover rare earth magnets from assemblies using hydrogen decrepitation.
The apparatus 10 comprises a reaction vessel 12 which houses a porous container 14 positioned above a heater 16. The reaction vessel 12 is open at its top end 18 so that scrap assemblies can be loaded into the vessel 12. The reaction vessel 12 can be closed by a lid 20 which is fastened by a securing means 22, to give a gas tight seal between the vessel top 18 and the lid 20.
The reaction vessel 12 is situated above a collection vessel 24 which is used to collect the rare earth particulate material produced by the decrepitation process. A valve 26 is used to control the flow of particulate material from the reaction vessel 12 to the collection vessel 24.
The reaction vessel 12 is connected to a rotary vacuum pump 28 via tubing 30. The flow of gas through the tubing 30 is controlled by a valve 32.
The reaction vessel 12 is also connected to gas supply sources 33, 34 through a gas control system 36 via a gas line 38. The gas control system 36 monitors the pressure in the reaction vessel 12 and maintains it at the desired level. A gas line valve 40 and a pressure transducer 42 are situated on the gas line 38 to allow monitoring and control of the gas flow to the reaction vessel 12.
Thermocouples 44 are provided to monitor the temperature inside the reaction vessel 12.
In use, scrap assemblies containing rare earth magnets are comminuted by a shredder or cut open by a cropper (not shown) and manually transferred into the porous container 14. In other embodiments (not shown), the shredded or cropped assemblies 46 are passed along a conveyor to the porous container 14. Depending on the nature and size of the assembly the whole assembly may be subject to hydrogen decrepitation or, alternatively, the assembly may be partially dismantled for processing only a part thereof. For example, the assemblies 46 may comprise shredded or cropped computer hard drives and voice coil assemblies, like the ones shown in Figures 2a , 2b and 2c. The lid 20 of the reaction vessel 12 is closed and secured by the securing means 22 so that the reaction vessel 12 is gas tight. The reaction vessel 12 is then evacuated through the tubing 30 (through open valve 32) using the rotary vacuum pump 28 to a pressure of 10⁻² mbar, as indicated by the pressure transducer 42.The valve 32 is closed and the reaction vessel 12 is backfilled with argon from gas supply source 33 to a pressure of 1 bar, through gas control system 36 and open valve 40 in gas line 36. The gas line valve 40 is then closed and the valve 32 is opened to allow the vacuum pump 28 to evacuate the reaction vessel 12 to a pressure of 10⁻² mbar. Valve 32 is then closed and the reaction vessel 12 is backfilled with hydrogen from supply source 34 to a pressure of between 1 and 7 bars. The pressure in the reaction vessel is maintained by the gas control system 36.

The decrepitation process starts once the hydrogen enters the reaction vessel 12 and accesses the assemblies 46, turning the rare earth magnets into a particulate material 48. The assemblies are exposed to the hydrogen gas for 2 to 5 hours.

The porous container 14 is agitated by a vibration means (not shown) during or after the decrepitation process to move the decrepitated magnet particles from the scrap assembly material and through the holes of the porous container 14 so that they collect in the bottom of the reaction vessel 12. Valve 26 is opened to allow the particles to fall from the reaction vessel 12 into the collection vessel 24.

If degassing of the particles is required, the valve 26 is left closed and vibration is not applied. The decrepitated scrap assembly material (including the rare earth particulate material) is heated by the heater 16 to a temperature of 750°C, which is monitored using thermocouples 44 and controlled using a temperature controller (not shown). Degassing is carried out at a pressure of below 1 Bar, ideally under a vacuum of 10⁻² Bar The hydrogen removed from the rare earth particulate material can either be pumped into the atmosphere or it can be captured by a metal hydride store 50.

The processing vessel can decrepitate a scrap charge of approximately 300 to 400 shredded/chopped hard disk drives or 1000 to 2000 voice coil assemblies. Processing 400 shredded hard drives results in the recovery of approximately 8 kg of NdFeB particulate material. Processing of 2000 voice coil assemblies results in the recovery of approximately 40 kg of NdFeB particulate material.

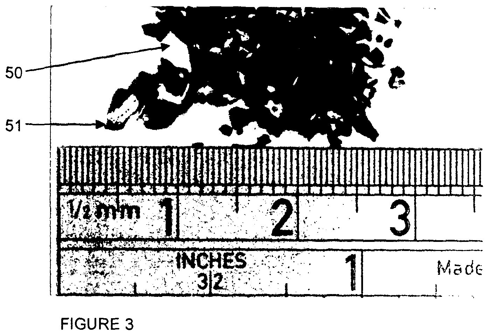

Figure 3 shows a sample of rare earth particulate material produced by the method of the present invention. The sample contains particles 50 with areas of nickel plating 51 present.

Rare earth particulate material recovered from assemblies by the methods of the invention may be further processed, for example by jet milling, and used in a variety of applications. For example, the material is suitable for use in the following processes:
1. The recycled particles can be put into a refining process, such as fused salt electrolysis, to separate the rare earths from the other components such as iron and boron.
2. The particles can be jet milled (optional), pressed and then sintered into new magnets.
3. The particles can be re-melted and melt spun to produce material for bonded magnets.
4. The particles may be heated in hydrogen and then degassed to produce fine grained material for bonded magnets by mixing with an appropriate bonding agent.
5. Degassed particles may be directly mixed with a bonding agent such as epoxy and then pressed to make cheap bonded magnets.

If the magnets of the assemblies have a relatively low rare earth content to start with (e.g. near stoichiometric Nd₂Fe₁₄B), it may be necessary to add extra rare earth to the decrepitated particulate material prior to forming new magnets in order to compensate for rare earth 'lost' to oxidation. During recycling the oxygen content of the rare earth material tends to rise and rare earth oxides form. A certain amount of clean, metallic rare earth rich phase is essential for sintering to full density, giving better magnetic properties and corrosion resistance. The increased oxygen content can make the material more difficult to sinter into new magnets and give a lower density product, hence the addition of small amounts of Nd or NdH₂ to the particulate material. Typically an addition of 1-2at% has been shown to give the best magnetic properties. If the Nd content of the magnets is sufficiently high to begin with then extra Nd may not be required as a smaller overall percentage of the neodymium will oxidise during processing.

Table 1 shows the properties of recycled magnets made from rare earth particulate material produced by the process of the invention, compared to an intact rare earth NdFeB magnet 'as received', i.e. prior to decrepitation. The 'as received' magnet had a composition of Nd_{13.4}Dy_{0.8} Al_{0.7}Nb_{0.3} Fe_{78.5}B_{6.3} (at% from ICP). Recycled sintered magnets were made using decrepitated particulate material with no Nd addition and with additions of 1%, 2% and 4% Nd.

**Table 1**

| | Density (gcm⁻³) | %porosity | Br (mT) | Hcj (kAm⁻¹) | Bhmax (kJm⁻³) |
|---|---|---|---|---|---|
| Intact magnet | 7.58 | 0 | 1380 | 860 | 340 |
| No Nd addition | 6.8 | 10.3 | 1080 | 460 | 195 |
| 1at% Nd | 7.29 | 3.8 | 1060 | 890 | 200 |
| 2at% Nd | 7.48 | 1.3 | 1160 | 925 | 250 |
| 4at% Nd | 7.49 | 1.2 | 930 | 1025 | 155 |

It was observed that the recycled magnet made with an addition of 2% Nd had the best properties including highest coercivity (Hcj) and highest remanence (Br).

## Claims

1. A method for recovering rare earth particulate material from an assembly comprising a rare earth magnet, preferably a NdFeB or SmCo magnet, the method comprising the steps of:
exposing the assembly to hydrogen gas to effect hydrogen decrepitation of the rare earth magnet whereby a rare earth particulate material is produced, and
tumbling the assembly in a rotatable porous container so as to facilitate separation of the rare earth particulate material from the assembly and movement of the rare earth particulate material through pores of the porous container.

2. The method according to claim 1, wherein the magnet is demagnetised during the decrepitation process, optionally by heating or by reversing the magnetic field.

3. The method according to claim 1 or claim 2, wherein the assembly is exposed to an atmosphere of a mixture of hydrogen with one or more inert gases, the atmosphere preferably comprising no more than 10% hydrogen.

4. The method according to any preceding claim, further comprising an initial step of opening the assembly prior to exposing the assembly to the hydrogen gas, in order to facilitate exposure of the rare earth magnet to the hydrogen, said initial step optionally involving destructively processing the assembly in the presence or absence of oxygen.

5. The method according to any preceding claim, wherein the pressure of hydrogen gas is from 1 mbar to 100 bar and/or wherein the decrepitation process is carried out at a temperature of no more than 600°C.

6. The method according to any preceding claim, further comprising the step of degassing to remove hydrogen from the rare earth particulate material, optionally by heating the particulate material at a temperature of no more than 800°C.

7. The method according to any preceding claim, wherein the rare earth magnet is Sm₂Co₁₇, and the decrepitation process is carried out at a temperature of at least 70 °C and/or a pressure of at least 7 bar.

8. The method according to any one of claims 1 to 6, wherein the method is for recovering NdFeB or SmCo₅ particulate material from an assembly comprising an NdFeB or a SmCo₅ magnet and a Sm₂Co₁₇ magnet, the method comprising the steps of:
exposing the assembly to hydrogen gas at a temperature and pressure sufficient to effect hydrogen decrepitation of the NdFeB or SmCo₅ magnet only, whereby NdFeB or SmCo₅ particulate material is produced, and
separating the NdFeB or SmCo₅ particulate material from the rest of the assembly.

9. The method according to any preceding claim, wherein the rare earth magnet has a coating and exposure of the assembly to hydrogen gas to effect hydrogen decrepitation results in production of coating particles in addition to rare earth particulate material, the method further comprises the step of separating the coating particles from the rare earth particulate material.

10. Apparatus (10) for separating rare earth particulate material from an assembly comprising a rare earth magnet, the apparatus comprising
a reaction vessel (12) having an opening (18) which can be closed to form a gas-tight seal,
a separation means (14) for separating the rare earth particulate material from the assembly, and
a collection means (24) for collecting the rare earth particulate material,
wherein the reaction vessel (12) is connected to a vacuum pump (28) and a gas control system (36),
wherein the gas control system (36) controls the supply of hydrogen gas to the reaction vessel (12)and
wherein the separation means (14) is capable of tumbling and the separation means (14) comprises a rotatable porous container positioned inside the reaction vessel, the rotatable porous container having pores which are sized to allow the rare earth particulate material to pass through the pores while retaining the assembly inside the container,
**characterised in that** the collection means comprises a collection vessel (24) that is separate from and connected to the reaction vessel (12), the collection vessel (24) being isolated from the reaction vessel (12) by a valve (26) which can be opened to allow the rare earth particulate material to pass from the reaction vessel (12) into the collection vessel (24) when required.

11. The apparatus according to claim 10, further comprising a means for opening or destructively processing the assemblies prior to decrepitation and/or a heater for heating the reaction vessel during the decrepitation and/or degassing process.

12. The apparatus according to claim 10 or claim 11, wherein the collection vessel (24) is situated underneath the reaction vessel so that the rare earth particulate material falls under gravity into the collection vessel (24) when the valve (26) is opened.

## Patentansprüche

1. Verfahren zum Zurückgewinnen von Seltenerden-Partikelmaterial von einer Baugruppe, umfassend einen Seltenerden-Magneten, vorzugsweise einen NdFeB- oder SmCo-Magneten, das Verfahren die folgenden Schritte umfassend:
Aussetzen der Baugruppe einem Wasserstoffgas, um Wasserstoffdekrepitation des Seltenerden-Magneten zu bewirken, wodurch ein Seltenerden-Partikelmaterial produziert wird, und
Schleudern der Baugruppe in einem drehbaren porösen Behälter, um Trennung des Seltenerden-Partikelmaterials von der Baugruppe und Bewegung des Seltenerden-Partikelmaterials durch Poren des porösen Behälters zu erleichtern.

2. Verfahren nach Anspruch 1, wobei der Magnet während des Dekrepitationsprozesses entmagnetisiert wird, wahlweise durch Erwärmen oder durch Umkehren des Magnetfelds.

3. Verfahren nach Anspruch 1 oder Anspruch 2, wobei die Baugruppe einer Atmosphäre einer Mischung von Wasserstoff mit einem oder mehreren inerten Gasen ausgesetzt wird, wobei die Atmosphäre vorzugsweise nicht mehr als 10 % Wasserstoff umfasst.

4. Verfahren nach einem der vorstehenden Ansprüche, ferner umfassend einen anfänglichen Schritt des Öffnens der Baugruppe vor dem Aussetzen der Baugruppe dem Wasserstoffgas, um Aussetzen des Seltenerden-Magneten dem Wasserstoff zu erleichtern, wobei der anfängliche Schritt wahlweise beinhaltet, die Baugruppe in Gegenwart oder bei Abwesenheit von Sauerstoff zerstörend zu verarbeiten.

5. Verfahren nach einem der vorstehenden Ansprüche, wobei der Druck von Wasserstoffgas von 1 mbar bis 100 bar beträgt und/oder wobei der Dekrepitationsprozess bei einer Temperatur von nicht mehr als 600 °C ausgeführt wird.

6. Verfahren nach einem der vorstehenden Ansprüche, ferner umfassend den Schritt des Entgasens, um Wasserstoff aus dem Seltenerden-Partikelmaterial zu entfernen, wahlweise durch Erwärmen des Partikelmaterials bei einer Temperatur von nicht mehr als 800 °C.

7. Verfahren nach einem der vorstehenden Ansprüche, wobei der Seltenerden-Magnet Sm₂Co₁₇ ist und der Dekrepitationsprozess bei einer Temperatur von mindestens 70 °C und/oder einem Druck von mindestens 7 bar ausgeführt wird.

8. Verfahren nach einem der Ansprüche 1 bis 6, wobei das Verfahren zum Zurückgewinnen von NdFeB- oder SmCo₅-Partikelmaterial von einer Baugruppe, umfassend einen NdFeB- oder SmCo₅-Magneten und einen Sm₂Co₁₇-Magneten, dient, das Verfahren die folgenden Schritte umfassend:
Aussetzen der Baugruppe einem Wasserstoffgas bei einer Temperatur und einem Druck, die ausreichend sind, Wasserstoffdekrepitation nur des NdFeB- oder SmCo₅-Magneten zu bewirken, wodurch NdFeB- oder SmCo₅-Partikelmaterial produziert wird, und
Trennen des NdFeB- oder SmCo₅-Partikelmaterials von dem Rest der Baugruppe.

9. Verfahren nach einem der vorstehenden Ansprüche, wobei der Seltenerden-Magnet eine Beschichtung aufweist und Aussetzen der Baugruppe dem Wasserstoffgas, um Wasserstoffdekrepitation zu bewirken, in der Produktion von Beschichtungspartikeln zusätzlich zu Seltenerden-Partikelmaterial resultiert, wobei das Verfahren ferner den Schritt des Trennens der Beschichtungspartikel von dem Seltenerden-Partikelmaterial umfasst.

10. Vorrichtung (10) zum Trennen von Seltenerden-Partikelmaterial von einer Baugruppe, die einen Seltenerden-Magneten umfasst, die Vorrichtung umfassend
ein Reaktionsgefäß (12) mit einer Öffnung (18), die geschlossen werden kann, um eine gasdichte Abdichtung zu erzeugen,
ein Trennmittel (14) zum Trennen des Seltenerden-Partikelmaterials von der Baugruppe und
ein Erfassungsmittel (24) zum Erfassen des Seltenerden-Partikelmaterials,
wobei das Reaktionsgefäß (12) mit einer Vakuumpumpe (28) und einem Gassteuerungssystem (36) verbunden ist,
wobei das Gassteuerungssystem (36) die Zuführung von Wasserstoffgas in das Reaktionsgefäß (12) steuert und
wobei das Trennmittel (14) zum Schleudern imstande ist und das Trennmittel (14) einen drehbaren porösen Behälter, der in dem Reaktionsgefäß positioniert ist, umfasst, wobei der drehbare poröse Behälter Poren aufweist, die in der Größe bemessen sind, zu gestatten, dass das Seltenerden-Partikelmaterial durch die Poren passiert, während sie die Baugruppe in dem Behälter zurückhalten,
**dadurch gekennzeichnet, dass** das Erfassungsmittel ein Erfassungsgefäß (24), das von dem Reaktionsgefäß (12) getrennt und damit verbunden ist, umfasst, wobei das Erfassungsgefäß (24) durch ein Ventil (26), das bei Bedarf geöffnet werden kann, um zu gestatten, dass das Seltenerden-Partikelmaterial aus dem Reaktionsgefäß (12) in das Erfassungsgefäß (24) passiert, von dem Reaktionsgefäß (12) isoliert ist.

11. Vorrichtung nach Anspruch 10, ferner umfassend ein Mittel zum Öffnen oder zerstörendem Verarbeiten der Baugruppen vor der Dekrepitation und/oder eine Heizung zum Erwärmen des Reaktionsgefäßes während des Dekrepitations- und/oder Entgasungsprozesses.

12. Vorrichtung nach Anspruch 10 oder Anspruch 11, wobei das Erfassungsgefäß (24) unter dem Reaktionsgefäß angeordnet ist, so dass das Seltenerden-Partikelmaterial durch Schwerkraft in das Erfassungsgefäß (24) fällt, wenn das Ventil (26) geöffnet wird.

## Revendications

1. Procédé pour récupérer un matériau particulaire de terre rare à partir d'un ensemble comprenant un aimant à terre rare, de préférence un aimant NdFeB ou SmCo, le procédé comprenant les étapes consistant:
à exposer l'ensemble à de l'hydrogène gazeux pour effectuer une décrépitation par hydrogène de l'aimant à terre rare de sorte qu'un matériau particulaire de terre rare est produit, et
à faire culbuter l'ensemble dans un récipient poreux rotatif de façon à faciliter la séparation du matériau particulaire de terre rare à partir de l'ensemble et à faire passer le matériau particulaire de terre rare à travers les pores du récipient poreux.

2. Procédé selon la revendication 1, dans lequel l'aimant est démagnétisé pendant le procédé de décrépitation, optionnellement en chauffant ou en inversant le champ magnétique.

3. Procédé selon la revendication 1 ou la revendication 2, dans lequel l'ensemble est exposé à une atmosphère d'un mélange d'hydrogène avec un ou plusieurs gaz inertes, l'atmosphère comprenant de préférence pas plus de 10% d'hydrogène.

4. Procédé selon l'une quelconque des revendications précédentes, comprenant en outre une étape initiale d'ouverture de l'ensemble avant d'exposer l'ensemble à l'hydrogène gazeux, afin de faciliter l'exposition de l'aimant à terre rare à l'hydrogène, ladite étape initiale faisant optionnellement intervenir un traitement destructif de l'ensemble en présence ou en l'absence d'hydrogène.

5. Procédé selon l'une quelconque des revendications précédentes, dans lequel la pression d'hydrogène gazeux est de 1 mbar à 100 bars et/ou dans lequel le procédé de décrépitation est mis en oeuvre à une température de pas plus de 600°C.

6. Procédé selon l'une quelconque des revendications précédentes, comprenant en outre l'étape de dégazage pour éliminer l'hydrogène à partir du matériau particulaire de terre rare, optionellement en chauffant le matériau particulaire à une température de pas plus de 800°C.

7. Procédé selon l'une quelconque des revendications précédentes, dans lequel l'aimant à terre rare est Sm₂Co₁₇, et le procédé de décrépitation est mis en oeuvre à une température d'au moins 70°C et/ou une pression d'au moins 7 bars.

8. Procédé selon l'une quelconque des revendications 1 à 6, lequel procédé est destiné à récupérer un matériau particulaire NdFeB ou SmCo₅ à partir d'un ensemble comprenant un aimant de NdFeB ou SmCo₅ et un aimant de Sm₂Co₁₇, le procédé comprenant les étapes consistant:
à exposer l'ensemble à de l'hydrogène gazeux à une température et une pression suffisantes pour effectuer la décrépitation par hydrogène de l'aimant de NdFeB ou SmCo₅ seulement, de sorte qu'un matériau particulaire de NdFeB ou SmCo₅ est produit, et
à séparer le matériau particulaire de NdFeB ou SmCo₅ à partir du reste de l'ensemble.

9. Procédé selon l'une quelconque des revendications précédentes, dans lequel l'aimant à terre rare a un revêtement et l'exposition de l'ensemble à de l'hydrogène gazeux pour effectuer une décrépitation par hydrogène conduit à la production de particules de revêtement en plus du matériau particulaire de terre rare, le procédé comprenant en outre l'étape consistant à séparer les particules de revêtement à partir du matériau particulaire de terre rare.

10. Appareil (10) pour séparer un matériau particulaire de terre rare à partir d'un ensemble comprenant un aimant à terre rare, l'appareil comprenant:
un réacteur (12) ayant une ouverture (18) qui peut être fermée pour former un joint étanche aux gaz;
un moyen de séparation (14) pour séparer le matériau particulaire de terre rare à partir de l'ensemble, et
un moyen de collecte (24) pour collecter le matériau particulaire de terre rare,
dans lequel le réacteur (12) est raccordé à une pompe à vide (28) et un système de contrôle de gaz (36),
dans lequel le système de contrôle de gaz (36) contrôle l'alimentation de l'hydrogène gazeux au réacteur (12) et
dans lequel le moyen de séparation (14) est capable de culbuter et le moyen de séparation (14) comprend un récipient poreux rotatif placé à l'intérieur du réacteur, le récipient poreux rotatif ayant des pores qui sont dimensionnés pour permettre au matériau particulaire de terre rare de passer à travers les pores tout en retenant l'ensemble à l'intérieur du récipient,
**caractérisé en ce que** le moyen de collecte comprend un récipient de collecte (24) qui est séparé du réacteur (12) et raccordé à celui-ci, le récipient de collecte (24) étant isolé du réacteur (12) par une vanne (26) qui peut être ouverte pour permettre au matériau particulaire de terre rare de passer du réacteur (12) au récipient de collecte (24) lorsqu'il le faut.

11. Appareil selon la revendication 10, comprenant en outre un moyen pour ouvrir ou traiter destructivement les ensembles avant la décrépitation et/ou un dispositif chauffant pour chauffer le réacteur pendant le traitement de décrépitation et/ou de dégazage.

12. Appareil selon la revendication 10 ou la revendication 11, dans lequel le récipient de collecte (24) se trouve en dessous du réacteur de sorte que le matériau particulaire de terre rare chute par gravité jusque dans le récipient de collecte (24) lorsque la vanne (26) est ouverte.
